# EUROPÄISCHE PATENTSCHRIFT

(11) **EP 3 266 052 B1**
(45) Veröffentlichungstag und Bekanntmachung des Hinweises auf die Patenterteilung: **08.05.2024**
(21) Anmeldenummer: 16707466.5
(22) Anmeldetag: 03.03.2016
(51) Int. Cl.: B25F 5/02, H01M 50/213, H01M 50/227, H01M 50/244, H01M 50/247, H01M 50/264, H01M 50/502

(54) **AKKUPACK FÜR EINE HANDWERKZEUGMASCHINE UND VERFAHREN ZUR HERSTELLUNG EINES AKKUPACKS FÜR EINE HANDWERKZEUGMASCHINE**
BATTERYPACK FOR A HAND TOOL AND PROCESS FOR THE MANUFACTURE OF A BATTERYPACK FOR A HAND TOOL
BATTERIE POUR UN OUTIL À MAIN ET PROCEDE DE FABRICATION D'UNE BATTERIE POUR UN OUTIL À MAIN

(30) Priorität: 06.03.2015 DE 102015204049; 02.03.2016 DE 102016203431
(43) Veröffentlichungstag der Anmeldung: 10.01.2018
(73) Patentinhaber: Robert Bosch GmbH, 70442 Stuttgart (DE)
(72) Erfinder: REJMAN, Marcin, 71334 Waiblingen (DE); SEIDEL, Thorsten, 71686 Remseck (DE)
(86) Internationale Anmeldenummer: PCT/EP2016/054501
(87) Internationale Veröffentlichungsnummer: WO 2016/142253

(56) Entgegenhaltungen:
- EP-A1- 2 787 559
- EP-A2- 2 223 782
- DE-A1-102004 043 828
- DE-A1-102013 211 459
- JP-A- 2008 091 233
- JP-A- 2011 146 151

## Beschreibung

Die vorliegende Erfindung betrifft einen Akkupack für eine Handwerkzeugmaschine nach Anspruch 1 und ein Verfahren zur Herstellung eines Akkupacks für eine Handwerkzeugmaschine nach Anspruch 12.

In der DE 10 2004 043828 A1 und in der DE 10 2013 211 459 A1 sind Akkupacks für Handwerkzeugmaschinen beschrieben.

Da Akkugeräte eine hohe Flexibilität beim Arbeiten ermöglichen, insbesondere unabhängig von Netzstrom sind und somit auch Außenarbeiten bequem durchgeführt werden können, ist bei einem Betrieb einer Handwerkzeugmaschine vielfach vorgesehen, Akkupacks einzusetzen.

Derartige Akkupacks sind grundsätzlich bekannt und weisen wiederaufladbare Akkumulatoren, in der Regel eine Mehrzahl von in Parallel- und/oder Reihenschaltung verbundener Akkuzellen auf. Im Zuge dieser Anmeldung ist unter einem Akkupack somit ein vorzugsweise aus mehreren elektrisch zusammengeschalteten Akkuzellen bestehendes Akkumulatorenpaket zu verstehen, das elektrische Energie speichern kann und für den Betrieb der Handwerkzeugmaschine die Energie liefert und austauschbar in einer Kammer, einer Schnittstelle oder dergleichen der Handwerkzeugmaschine aufgenommen ist. Das Zuordnen des Akkupacks zur Handwerkzeugmaschine erfolgt durch Einstecken beziehungsweise Einschieben des Akkupacks in eine komplementäre Einsteckbuchse des Gerätegehäuses, wobei der Akkupack mit dem Gerätegehäuse der Handwerkzeugmaschine derart koppelbar ist, dass beim Koppeln der beiden Gehäuse das Elektrowerkzeug elektrisch an den Akkupack angekoppelt und mechanisch verriegelt wird. Die elektrische Kontaktierung erfolgt zumeist im Bereich der Verriegelungsvorrichtung.

Bei den Akkupacks erweist es sich als nachteilig, dass in jeder Akkuzelle sowohl bei der Stromabgabe als auch bei der Stromaufnahme Verlustwärme anfällt, die zu einer erhöhten Temperatur des gesamten Akkublocks führen kann. Um Schädigungen der Akkuzelle und/oder des Akkublocks zu vermeiden, muss einerseits Verlustwärme sicher abgeführt werden und andererseits bei zu niedrigen Außentemperaturen eine Temperierung des Akkupacks möglich sein, was insbesondere bei chemisch auf Lithium basierenden Zellen von Vorteil ist.

Um mehrere in Parallel- oder in Reihenschaltung verschaltete Akkuzellen aufzunehmen, werden in den Akkupacks die Akkuzellen direkt innerhalb des Akkugehäuses fixiert oder ohne Fixierung positioniert. Erfolgt keine Fixierung, werden bevorzugt Papphülsen zur Isolation der Zellen untereinander verwendet. Handwerkzeugmaschinen, insbesondere Akkubohrer, erzeugen im Betrieb nicht unerhebliche Vibrationen. Diese Vibrationen werden über das Gehäuse auf das Akkugehäuse und von dort auf in dem Akkugehäuse vorhandene Akkuzellen übertragen. Ein derartiges Schwingen des Akkupacks ist für die Lebensdauer des Akkupacks, insbesondere für die Lebensdauer der Akkuzellen und der elektrischen Kontaktierungen nachteilig.

So ist in der Regel vorgesehen, die Akkuzellen untereinander bzw. Akkuzellenblöcke untereinander in Reihe zu schalten. Hierzu sind im Stand der Technik mechanische Montageprinzipien bekannt, welche elastische Einlagen wie Elastomerkerne oder Klemmkeile mit kraftschlüssigen Verbindungselementen wie Schrauben, Schnappelementen kombiniert, um eine hohe Anpresskraft zwischen Zellaußenwand und innerer Gehäusewand aufzubauen. Dies ist technisch sehr aufwändig. Ferner erweist es sich als nachteilig, dass die Anbindung der Ackuzelle im Zellenhalter nur indirekt erfolgt, wodurch sich Nachteile bezüglich der mechanischen Robustheit des Zellenhalters ergeben.

Desweiteren ist aus dem Stand der Technik bekannt, die Luftspalte im Zellenhalter mit einer Vergussmasse zu verfüllen. Nachteilig ist dabei wiederum der verhältnismäßig hohe Montageaufwand. Ferner kann die Vergussmasse an die Zellpole gelangen, was zu einer Beeinträchtigung der Betriebssicherheit des Akkupacks führt.

### Offenbarung der Erfindung

Aufgabe der Erfindung ist es, die oben genannten Nachteile zu umgehen und einen Akkupack für eine Handwerkzeugmaschine und ein Verfahren zur Herstellung eines Akkupacks für eine Handwerkzeugmaschine bereitzustellen, bei dem die oben genannten Nachteile verbessert werden. Dabei soll der Akkupack einerseits eine gute Ergonomie und Montierbarkeit aufweisen, kostengünstig und einfach aufgebaut sein und andererseits eine sichere Abfuhr anfallender Verlustwärme ermöglichen.

Diese Aufgabe wird durch einen Akkupack gemäß Anspruch 1 und ein Verfahren zur Herstellung eines Akkupacks für eine Handwerkzeugmaschine gemäß Anspruch 12 gelöst. Vorteilhafte Ausgestaltungen, Varianten und Weiterbildungen der Erfindung sind den Unteransprüchen zu entnehmen.

Erfindungsgemäß ist vorgesehen, dass eine Handwerkzeugmaschine ein Akkupackgehäuse aufweist, wobei das Akkupackgehäuse wenigstens eine erste Gehäusekomponente und eine zweite Gehäusekomponente umfasst. Der Akkupack weist ferner zumindest einen Zellenhalter auf, wobei der Zellenhalter mindestens zwei miteinander in einer Parallel- und/oder in einer Reihenschaltung verbundene Akkuzellen aufnimmt, wobei die Akkuzellen jeweils zwei senkrecht zu einer Längsachse stehende Stirnflächen aufweisen. Desweiteren umfasst das Akkupackgehäuse eine Akkupackelektronik mit Kontaktelementen zur Herstellung einer elektrischen Verbindung zwischen dem Akkupack und der Handwerkzeugmaschine. Ferner weist der Zellenhalter zumindest bereichsweise mit den Akkuzellen korrespondierende hülsenartige Isolierwandungen auf, wobei die Isolierwandungen derart ausgeführt sind, dass eine elektrische Kontaktierung zwischen den Akkuzellen verhindert wird. Der Zellenhalter weist eine Materialdehnung auf, wobei die Materialdehnung zwischen 0,2% und 5%, insbesondere zwischen 0,5% und 3%, besonders bevorzugt zwischen 1% und 2% liegt.

Vorteilhafterweise weist der Zellenhalter für jede Akkuzelle eine, insbesondere zylindrische, Zellenöffnung zur Aufnahme einer Akkuzelle auf, wobei zwischen den Zellenöffnungen die Isolierwandungen angeordnet sind. Insbesondere ist jede Akkuzelle von einer hülsenartigen Isolierwandung umgeben. Bei den Ackuzellen handelt es sich insbesondere um zylindrische Akkuzellen. Insbesondere ist jede Akkuzelle über ihre gesamte Mantelfläche von einer hülsenartigen Isolierwandung umgeben. Der Zellenhalter kann insbesondere aus einem Spritzgussteil bestehen, das entsprechende Aufnahmen für die Akkuzellen aufweist, so dass diese im Zellenhalter voneinander beabstandet gehalten sind. Auf diese Weise wird verhindert, dass Kurzschlüsse über die Berührung der einzelnen Akkuzellen miteinander entstehen. Ferner ist vorgesehen, dass der Zellenhalter zumindest teilweise aus einem Material besteht, das wärmeleitend und elektrisch isolierend ist, damit entstehende Wärme der Akkuzellen besser abgeführt werden kann.

In einer bevorzugten Ausführungsform beträgt ein Durchmesser D1 der Zellenöffnungen vor der Aufnahme der Akkuzellen in die Zellenöffnungen zwischen 97 % und 99 %, insbesondere zwischen 97,5 % und 98,5 % eines Durchmessers D2 der korrespondierenden Akkuzellen beträgt. Vorteilhafterweise ist ein Durchmesser D1 der Zellenöffnungen vor der Aufnahme der Akkuzellen in die Zellenöffnungen zwischen 0,05mm und 0,20mm, insbesondere zwischen 0,10mm und 0,15mm kleiner als ein Durchmesser D2 der korrespondierenden Akkuzellen. Auf diese Weise liegt nach dem Einpressen der Akkuzellen der Zellenhalter im Bereich der Zellöffnungen im Wesentlichen spaltfrei an den Akkuzellen an, so dass neben einer sicheren Aufnahme der Akkuzellen im Zellenhalter auch eine gute Wärmeabfuhr der während des Betriebs des Akkupacks entstehenden Wärme von den Akkuzellen weg erreicht werden kann. Nach dem Einpressen liegt der Zellenhalter im Bereich der Zellöffnungen derart im Wesentlichen spaltfrei an den Akkuzellen an, dass sich zwischen dem Zellenhalter und den Akkuzellen im Wesentlichen keine Luft befindet. Das Einpressen vermeidet isolierende Luftspalten zwischen dem Zellenhalter und den Akkuzellen im Bereich der Zellenöffnungen.

Die Akkuzellen sind bevorzugt in den Zellenhalter eingepresst. Insbesondere ist jede Akkuzelle in der ihr zugeordneten Zellenöffnung eingepresst. Durch das Einpressen wirkt eine Zellhaltekraft des Zellenhalters auf die Akkuzellen in den Zellenöffnungen. Bevorzugterweise wirkt zwischen dem Zellenhalter und den aufgenommenen Akkuzellen eine Zellhaltekraft, wobei die Zellhaltekraft zwischen 20N und 400N, insbesondere zwischen 100N und 300N, besonders bevorzugt zwischen 150N und 250N beträgt. Dies ermöglicht eine form- und kraftschlüssige Verbindung der Akkuzellen mit dem Zellenhalter. Die reibschlüssige Verbindung verhindert eine Bewegung der Akkuzellen relativ zu dem Zellenhalter und relativ zu dem Akkupackgehäuse.

Erfindungsgemäß ist vorgesehen, dass der Zellenhalter im Bereich der Stirnseiten der Akkuzellen freie Bereiche aufweist, in welchen die elektrische Verbindung der Akkuzellen untereinander über Zellverbinder erfolgt. Insbesondere ist der Zellenhalter im Bereich der Stirnseiten der Akkuzellen offen. Damit ist der Zellenhalter im Bereich der beiden Pole einer jeden Akkuzelle offen. Dabei ist es besonders vorteilhaft, wenn die Zellverbinder mit den Akkuzellen über eine Schweißverbindung und die Zellverbinder mit den mit der Akkupackelektronik über eine Lötverbindungen verbunden sind. Hierdurch wird eine besonders einfache mechanische und auch elektrische Kontaktierung erreicht, zum anderen stellen derartige Verbindungen auch besonders sichere Verbindungen dar. Ferner kann durch eine entsprechend ausgeführte Schweißverbindung auch ein Toleranzausgleich sowie ein Wärmedehnungsausgleich erzielt werden.

Vorzugsweise weist der Zellenhalter im Bereich der Zellöffnungen mit den Ackuzellen korrespondierende Anschläge auf, die eine gewünschte Lage der Ackuzellen im Zellenhalter gewährleisten. Dabei ist es möglich, dass sich diese Anschläge lediglich auf einer Seite des Zellenhalters oder beispielsweise immer auf der Minuspol oder Pluspolseite der eingepressten Akkuzellen befinden. Grundsätzlich erleichtern diese Anschläge das korrekte Einpressen der Akkuzellen in den Zellenhalter.

Um eine optimale Abfuhr der entstehenden Wärme zu gewährleisten, bildet der Zellenhalter in einer besonders bevorzugten Ausführungsform zumindest bereichsweise eine Außenseite des Akkupackgehäuse aus. Dies ermöglicht eine höhere Wärmeleitfähigkeit als bei Akkupacks mit einer zusätzlichen Außenseite, ist platzsparend und reduziert zudem die Materialkosten. Besonders Vorteilhaft ist es, wenn die Akkuzellen zumindest bereichsweise keine Isolierummantelung aufweise. Auf diese Weise kann einerseits das Einpressen der Akkuzellen in den Zellenhalter erleichtert und andererseits eine bessere Wärmeleitfähigkeit gewährleistet werden.

Der erfindungsgemäße Akkupack kann mit einer Handwerkzeugmaschine lösbar verbunden sein. Dementsprechend bildet eine Handwerkzeugmaschine, sofern sie mit einem erfindungsgemäßen Akkupack verbunden ist, einen weiteren Gegenstand der Erfindung. Der in der Handwerkzeugmaschine eingesetzte Akkupack dient dabei dem Antrieb der Handwerkzeugmaschine.

Desweiteren wird die Aufgabe durch ein Verfahren zur Herstellung eines Akkupacks für eine Handwerkzeugmaschine gelöst. Erfindungsgemäß ist vorgesehen, dass der Akkupack einen Zellenhalter sowie zumindest zwei Akkuzellen aufweist, wobei die Akkuzellen durch korrespondierende Zellverbinder in Parallel- und/oder Reihenschaltung elektrisch miteinander verbunden sind. Der Zellenhalter weist hülsenartige Isolierwandlungen auf, zwischen denen sich zylindrische Zellenöffnungen zur Aufnahme der Akkuzellen befinden, wobei die Akkuzellen derart in die Zellenöffnungen eingepresst werden, dass eine form- und kraftschlüssige Verbindung zwischen dem Zellenhalter und den Akkuzellen hergestellt wird. Erfindungsgemäß ist vorgesehen, dass der Zellenhalter vor dem Einpressvorgang vorgewärmt wird, bevorzugterweise auf eine Temperatur zwischen 60°C und 90°C, insbesondere zwischen 70°C und 80°C. Auf diese Weise kann der Einpressvorgang effizienter und materialschonender gestalten werden. Dies hat zum einen den Vorteil, dass sich thermische Dehnungen einstellen, die einen Teil der notwendigen Verformungen beim Einpressen vorwegnehmen, zum anderen steigt bei den thermoplastischen Kunststoffen mit zunehmender Temperatur die Verformbarkeit, was dem Herstellungsvorgang zugutekommt.

Bei dem offenbarten Verfahren treten elastische und/oder plastische Materialdehnungen im Bereich des Zellenhalters auf. Um ein beschädigungsfreies Einbringen der Akkuzellen in die Zellenöffnungen zu gewährleisten besteht der Zellenhalter aus einem Kunststoffmaterial, vorzugsweise aus einem thermoplastischen Kunststoff, einem duroplastischen Kunststoff, oder einem Elastomer, besonders bevorzugterweise aus einem Polyethylen, wobei vorzugsweise ein Polyethylen mit einer Dichte zwischen 0,90g/cm³ und 1,0g/cm³, vorzugsweise zwischen 0,95g/cm³ und 0,99g/cm³, besonders bevorzugterweise zwischen 0,96g/cm³ und 0,98g/cm³ verwendet wird.

Zur Vermeidung von isolierenden Luftspalten zwischen dem Zellenhalter und den Akkuzellen, sieht eine weitere bevorzugte Ausgestaltung der Erfindung vor, dass nach dem Einpressen der Akkuzellen der Zellenhalter im Bereich der Zellöffnungen im Wesentlichen spaltfrei an den Akkuzellen anliegt. Um das zu erreichen beträgt vorteilhafterweise ein Durchmesser D1 der Zellenöffnungen vor dem Einpressen der Akkuzellen in die Zellenöffnungen zwischen 97 % und 99 %, insbesondere zwischen 97,5 % und 98,5 % eines Durchmessers D2 der korrespondierenden Akkuzellen. Alternativ ist ein Durchmesser D1 der Zellenöffnungen vor dem Einpressen der Akkuzellen in die Zellenöffnungen zwischen 0,05mm und 0,20mm, insbesondere zwischen 0,10mm und 0,15mm kleiner als ein Durchmesser D2 der korrespondierenden Akkuzellen. Alternativ kann ein derart spaltfreier Sitz auch erreicht werden, wenn ein Umfang der Zellenöffnungen vor der Aufnahme der Akkuzellen in die Zellenöffnungen zwischen 97% bis 99.5% des eines Umfanges des Zellmantels, bevorzugterweise zwischen 98% bis 99% beträgt.

Dabei ist es besonders vorteilhaft, dass im Zellenhalter nach dem Einpressen der Akkuzellen auftretende Materialdehnung zwischen 0,2% und 5%, insbesondere zwischen 0,5% und 3%, besonders bevorzugt zwischen 1% und 2% liegt. Hierdurch wird eine ausreichend hohe Zellhaltekraft zur Fixierung der Akkuzellen im Zellenträger mobilisiert. Diese Zellhaltekraft zwischen dem Zellenhalter und den eingepressten Akkuzellen beträgt in einer bevorzugten Ausführungsform der Erfindung zwischen 20N und 400N, insbesondere zwischen 100N und 300N, besonders bevorzugt zwischen 150N und 250N.

Ferner können als Akkuzellen insbesondere Lithiumionenzellen verwendet werden, da es insbesondere bei Lithiumzellen möglich ist, mehrere Akkuzellen zu Akkuzellenblöcken zusammenzufassen, in denen mehrere Akkuzellen in einer Parallelschaltung verbunden sind. Dabei ist es besonders vorteilhaft, dass der Zellenhalter Akkuzellen mit verschiedenen Durchmessern und Längen aufnehmen kann, wodurch die Anwendung des Zellenhalter bzw. des Zellenträger in unterschiedlichen Akkupacks gewährleistet werden kann.

Mittels einer Akkupackelektronik kann u. a. der Ladezustand über die Spannung der einzelnen Akkuzellen überwacht und gesteuert werden. Alternativ kann eine Einzelzellenüberwachung erfolgen, wobei einzelne Akkuzellen mittels Kontaktmittel direkt mit der Leiterplatte der Akkupackelektronik verbunden sein können. Eine derartige Verbindung kann beispielsweise durch eine Lötverbindung erfolgen, wobei die Akkupackelektronik vorteilhafterweise entsprechende Anlötpads aufweisen kann. Somit kann aufgrund der Verbindung zwischen den Akkuzellen und der Akkupackelektronik festgestellt werden, ob alle Akkuzellen vorschriftsmäßig geladen werden bzw. ob gegebenenfalls ein Ladestrom erreicht wird, den die Akkuzellen nicht zu verkraften vermögen. Darüber hinaus kann eine Regelung vorgesehen sein, mittels derer der Ladestrom so geregelt wird, dass einerseits eine Überlastung einzelner Akkuzellen verhindert wird, und auf der anderen Seite sämtliche Akkuzellen vollständig aufgeladen werden können. Auf diese Weise wird über lange Zeit eine gute Gebrauchsfähigkeit des entsprechenden Akkupacks erreicht. Die Akkupackelektronik kann darüber hinaus noch eine Reihe weiterer Elektronikelemente zur Steuerung, Regelung oder auch zur Erkennung des Akkupacks umfassen. Ferner können weitere Bauteile, wie insbesondere Schalter, aber auch Ladezustandsanzeigen und/oder Überlastungssicherung mit der Akkupackelektronik verbunden sein.

Mit Hilfe der beschriebenen optimierten Ausgestaltung des erfindungsgemäßen Akkupacks werden viele Funktionen innerhalb des Akkupacks verbessert, so dass der Zellenhalter beispielsweise die Funktion einer Montageplattform erfüllen und die internen Bauteile des Akkupacks aufnehmen und fixieren kann. Auf diese Weise kann der Montageprozess für den Akkupack optimiert und auf zusätzliche Komponenten wie z.B. Klebefolien, Papphülsen oder Isoliereinlagen verzichtet werden. Des Weiteren können in einem Akkupack verschiedene Ausführungsformen eines Zellenhalters verwendet werden, so dass Akkuzellen mit verschiedenen Durchmessern und Längen aufgenommen werden können und eine Anwendung des Zellenhalter bzw. des Zellenträger in unterschiedlichen Akkupacks gewährleistet werden kann.

Generell werden unter einer Handwerkzeugmaschineim Rahmen der Anmeldung sämtliche Handwerkzeugmaschinen mit einem in Rotation oder Translation versetzbaren Werkzeugträger, der direkt, über ein Getriebe oder über ein Planetengetriebe von einem Antriebsmotor antreibbar ist, wie beispielsweise Stabschrauber, Akku-Bohrer, Schlagbohrmaschinen, Multifunktionswerkzeuge, Sägen, Scheren, Schleifer und/ oder Bohrschrauber verstanden. Als Übertragung elektrischer Energie soll in diesem Zusammenhang insbesondere verstanden werden, dass die Handwerkzeugmaschine über den Akkupack mit Energie versorgt wird.

Weitere Merkmale, Anwendungsmöglichkeiten und Vorteile der Erfindung ergeben sich aus der nachfolgenden Beschreibung der Ausführungsbeispiele der Erfindung, welche in den Figuren dargestellt sind. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

### Zeichnungen

Die Erfindung wird im Folgenden anhand von bevorzugten Ausführungsbeispielen näher erläutert, wobei für gleiche Merkmale gleiche Bezugszeichen verwendet werden. Die Zeichnungen sind schematisch und zeigen:
- Fig. 1: beispielhaft eine Ansicht einer Handwerkzeugmaschine mit einem erfindungsgemäßen Akkupack;
- Fig. 2: eine perspektivische Darstellung eines erfindungsgemäßen Akkupacks;
- Fig. 3: eine Draufsicht auf den Akkupack aus Figur 2;
- Fig. 4: eine perspektivische Explosionsdarstellung eines erfindungsgemäßen Akkupacks; und
- Fig. 5: eine Schnittansicht des Akkupacks aus Fig. 4; und
- Fig. 6: eine perspektivische Ansicht zweier Akkuzelle.

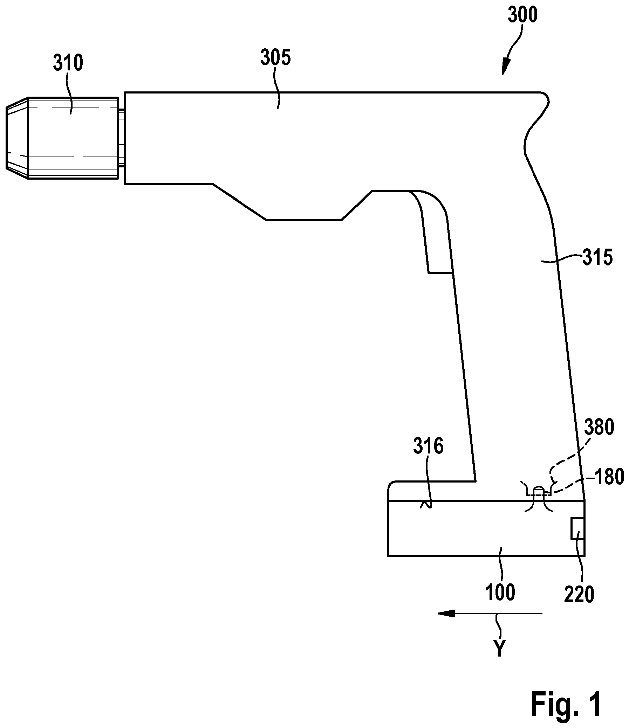

Die Figur 1 zeigt ein als Handwerkzeugmaschine 300 ausgebildetes Elektrogerät. Gemäß der dargestellten Ausführungsform ist die Handwerkzeugmaschine 300 zur netzunabhängigen Stromversorgung mechanisch und elektrisch mit dem Ackupack 100 verbindbar. In Fig. 1 ist die Handwerkzeugmaschine 300 beispielhaft als Akku-Bohrschrauber ausgebildet. Es wird jedoch darauf hingewiesen, dass die vorliegende Erfindung nicht auf Akku-Bohrschrauber beschränkt ist, sondern vielmehr bei unterschiedlichen Handwerkzeugmaschinen 300 Anwendung finden kann, welche mit einem Akkupack 100 betrieben werden. Die Handwerkzeugmaschine 300 weist einen Grundkörper 305, an welchem eine Werkzeugaufnahme 320 befestigt ist, sowie einen Handgriff 315 mit einer Schnittstelle 380 auf, an welchem eine korrespondierende Schnittstelle 180 eines erfindungsgemäßen Ackupacks 100, hier in verriegelter Stellung angeordnet ist. Der Akkupack 100 ist als Schiebeakkupack ausgebildet.

Beim Anbringen des Akkupacks 100 an der Handwerkzeugmaschine 300 werden an der Handwerkzeugmaschine 300 vorgesehene Aufnahmemittel, z. B. Führungsnuten und Führungsrippen mit korrespondierenden Führungselementen 150 des Akkupacks 100 in Eingriff gebracht, wobei der Akkupack 100 in einer Schieberichtung y entlang der Aufnahmemittel des Handgriffs 315 eingeführt wird, und wobei der Akkupack 100 entlang einer unteren, im Wesentlichen senkrecht zur Längsrichtung des Handgriffs 315 ausgerichteten Außenfläche 316 des Handgriffs 315 in die Akkupackaufnahme einer Handwerkzeugmaschine 300 geschoben wird. In der in der Figur 1 gezeigten Position ist der Akkupack 100 an dem Handgriff 315 der Handwerkzeugmaschine 300 befestigt und durch Verriegelungsmittel verriegelt. Die Verriegelungsmittel umfassen unter anderem ein Verriegelungselement und ein Betätigungselement 220. Durch Betätigung des Betätigungsmittels 220 kann der Akkupack 100 von dem Handgriff 315 der Handwerkzeugmaschine 300 gelöst werden.

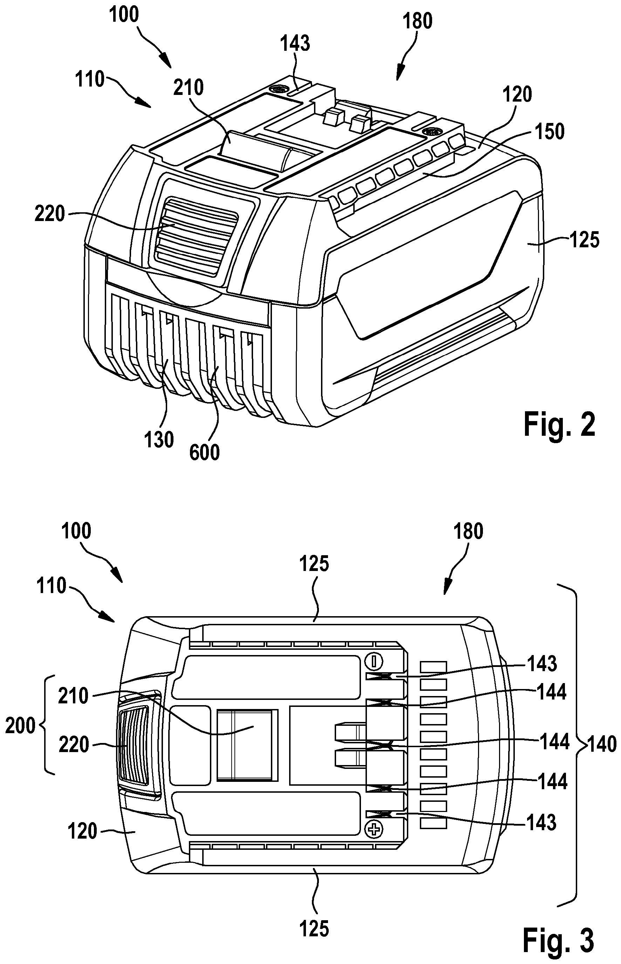

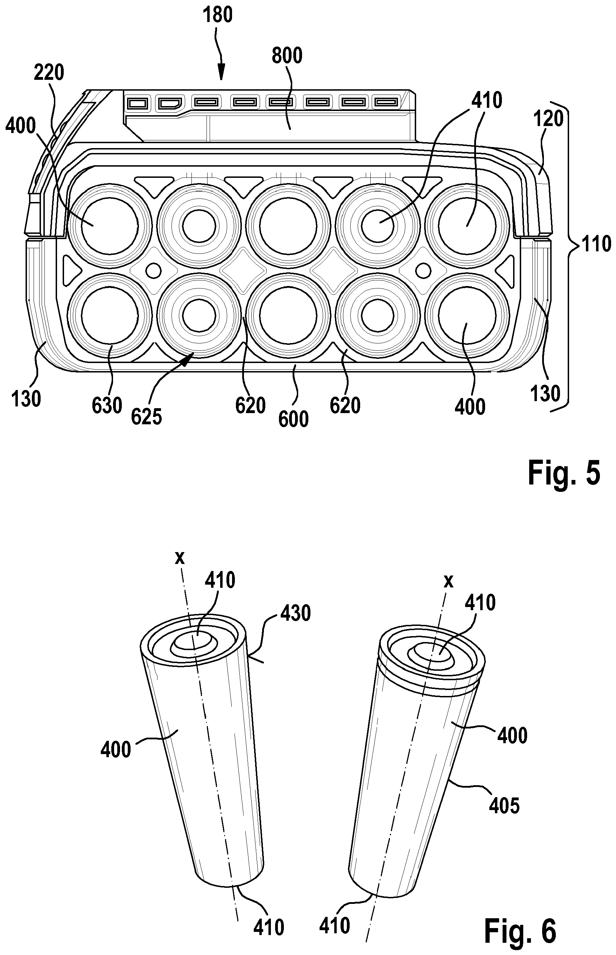

Die Figuren 2 bis 5 zeigen einen erfindungsgemäßen Akkupack 100 für eine Handwerkzeugmaschine 300. Dieser weist ein Akkupackgehäuse 110 aus einer ersten Gehäusekomponente 120 und einer zweiten Gehäusekomponente 130 auf, wobei das Gehäuse zwischen der ersten Gehäusekomponente 120 und der zweiten Gehäusekomponente 130 zumindest eine, vorzugsweise und hier dargestellt eine Mehrzahl parallel oder seriell verschaltete Akkuzellen 400 aufnimmt. Die Akkuzellen 400 werden bevorzugterweise mittels eines Zellenhalters 600 zur Isolation der Akkuzellen 400 untereinander in dem Akkupackgehäuse 110 positioniert und gehalten. Zusätzlich können die Akkuzellen 400 zur Isolation untereinander mit einer aus dem Stand der Technik an sich bekannten Isolierummantelung 430 versehen sein. Als Isolierummantelung 430 können Papphülsen oder Kunststoffhülsen, z.B. Schrumpfschläuche, vorgesehen sein. Die Isolierummantelung 430 ist unten im Zusammenhang mit Figur 6 weiter beschrieben. Der Akkupack 100 ist in der dargestellten Ausführungsvariante als Schiebeakkupack ausgebildet.

Zum lösbaren Anbringen des Akkupacks 100 an einer Handwerkzeugmaschine 300 oder an einem Ladegerät weist der Akkupack 100 eine Schnittstelle 180 zur lösbaren mechanischen und elektrischen Verbindung mit einer korrespondierenden Schnittstelle 380 der Handwerkzeugmaschine 300 oder einer korrespondierende Schnittstelle des Ladegerätes auf. Beim Anbringen des Akkupacks 100 werden Aufnahmemittel, z. B. Führungsnuten und Führungsrippen, der Handwerkzeugmaschine 300 oder des Ladegerätes zur Aufnahme der korrespondierenden Führungselemente des Akkupacks 100 mit diesen in Eingriff gebracht, wobei der Akkupack 100 in einer Kontaktierungsrichtung y entlang der Aufnahmemittel eingeführt und die Schnittstelle 180 des Akkupacks 100 in die korrespondierende Schnittstelle 380 der Handwerkzeugmaschine 300 oder die korrespondierende Schnittstelle des Ladegerätes geschoben wird. Über die Schnittstellen 180, 380 kann der Akkupack 100 der Handwerkzeugmaschine 300 und/oder dem Ladegerät zugeordnet werden.

Zum Verriegeln des Akkupacks 100 am Handgriff 315 wird der Akkupack 100 in einer Schieberichtung y entlang des Handgriffs 315 geschoben, und zwar entlang einer unteren, im Wesentlichen senkrecht zur Längsrichtung des Handgriffs 315 ausgerichteten Außenfläche des Handgriffs 315. In der in der Figur 1 gezeigten Position ist der Akkupack 100 durch Verriegelungsmittel 200 am Handgriff 315 verriegelt. Die Verriegelungsmittel 200 umfassen unter anderem ein nur schematisch angedeutetes Verriegelungselement 210 und ein Betätigungselement 220. Durch Betätigung des Betätigungsmittels 220 kann der Akkupack 100 von dem Handgriff 315 der Handwerkzeugmaschine 300 gelöst werden. Nach Entriegelung des Akkupacks 100 kann dieser vom Handgriff 315 getrennt werden, und zwar durch ein Schieben des Akkupacks 100 entgegen der Schieberichtung y entlang einer unteren Fläche des Handgriffs 315. Beim Anbringen des Akkupacks 100 an einer Handwerkzeugmaschine 300 wird das Verriegelungselement 210 in Eingriff mit einer nicht näher gezeigten korrespondierenden Aufnahme im Handgriff 315 der Handwerkzeugmaschine 300 gebracht.

Wie in Figur 3 zu erkennen ist, umfasst die Schnittstelle 180 außerdem Kontaktelemente 140 zur elektrischen Kontaktierung des Akkupacks 100 mit der Handwerkzeugmaschine 300 oder dem Ladegerät. Die Kontaktelemente 143 sind als Spannungskontaktelemente ausgebildet und dienen als Lade- und/oder Entladekontaktelemente. Die Kontaktelemente 144 sind als Signalkontaktelemente ausgebildet und dienen der Signalübertragung vom Akkupack 100 zu der Handwerkzeugmaschine 300 oder dem Ladegerät und/oder von der Handwerkzeugmaschine 300 oder dem Ladegerät zum Akkupack 100.

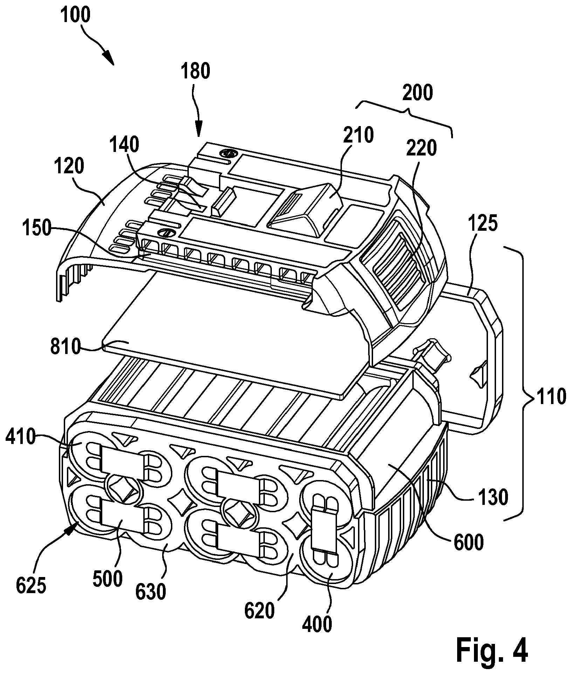

Figur 4 zeigt einen Akkupack 100 in der Explosionsdarstellung. Hier ist deutlich zu erkennen, dass das Akkupackgehäuse 110 einen Zellenhalter 600 mit einer Mehrzahl in einer Reihenschaltung verschalteter Akkuzellen 400 aufweist, wobei die zweite Gehäusekomponente 130 den Zellenhalter 600 unmittelbar ausbildet. Der Zellenhalter 600 bildet zugleich die zweite Gehäusekomponente 130. Die Verbindung der Akkuzellen 400 untereinander wird über Zellverbinder 500 realisiert. Ferner ist zu erkennen, dass die einzelnen Akkuzellen 400 zur mechanischen Fixierung in dem Zellenhalter 600 beabstandet voneinander aufgenommen sind. Der Zellenhalter 600 dient neben der Fixierung der Akkuzellen 400 in dem Akkupackgehäuse 110 bzw. in der zweiten Gehäusekomponente 130 auch der Kühlung der Akkuzellen 400 und besteht aus einem wärmeleitfähigen Material, beispielsweise Aluminium oder einem Kunststoff. Desweiteren weist der Zellenhalter 600 hülsenartige Isolierwandungen 620 auf, so dass die einzelnen Ackuzellen 400 separiert werden und eine elektrische Isolierung der einzelnen Ackuzellen 400 voneinander gewährleistet werden kann. Der Wärmeübergangswiderstand zwischen den benachbarten Akkuzellen 400 sowie zwischen den Ackuzellen 400 und dem Zellenhalter 600 ist dabei möglichst gering, so dass die von den Akkuzellen 400 erzeugte Verlustwärme gut nach außen abgeführt und eine Überhitzung des Akkupacks 100 im Inneren verhindert werden kann. An der Oberfläche des Zellenhalters 600 ist innerhalb des Akkupackgehäuses 110 eine Leiterplatine 810 einer Akkupackelektronik befestigt. Ferner umfasst die Akkupackelektronik die Kontaktelemente 140 zur Herstellung der elektrischen und mechanischen Verbindung zwischen dem Akkupack 100 und der Handwerkzeugmaschine 300 bzw. zwischen dem Akkupack 100 und dem Ladegerät. Die Verbindung zwischen der Akkupackelektronik und dem Zellenhalter 600 wird durch nicht näher dargestellte Befestigungselemente gewährleistet.

In der in Figur 4 dargestellten Ausführungsform weist das Akkupackgehäuse 110 ferner zwei Seitenkomponenten 125 auf, wobei in Figur 4 lediglich eine der beiden Seitenkomponenten 125 dargestellt ist. Die Seitenkomponenten 125 halten im zusammengebauten Zustand die erste Gehäusekomponente 120 und die zweite Gehäusekomponente 130 derart zusammen, dass ein Ablösen der ersten Gehäusekomponente 120 von der zweiten Gehäusekomponente 130, oder umgekehrt, verhindert wird. Alternative Montage- bzw. Befestigungsprinzipien der Gehäusekomponenten des Akkupackgehäuses 110 sind möglich. In der dargestellten Ausführungsform ist deutlich erkennbar, dass der Zellenhalter 600 bereichsweise eine Außenseite der zweiten Gehäusekomponente 130 bzw. des Ackupacks 100 ausbildet, wobei alternativ der Zellenhalter 600 auch bereichsweise eine Außenseite der ersten Gehäusekomponente 120 ausbilden kann. Wie weiter unten näher ausgeführt, umgibt der Zellenhalter 600 die Mantelflächen 405 der Akkuzellen 400 im Wesentlichen vollständig. Dabei liegen, wie in den Figuren 4 und 5 erkennbar, im Wesentlichen nur die Stirnflächen 410 der Akkuzellen 400 frei. Die Seitenkomponenten 125 bilden im Bereich der Stirnflächen 410 eine Außenseite des Akkupacks 100.

Der Zellenhalter 600 weist hülsenartige Isolierwandlungen 620 auf, zwischen denen sich zylindrische Zellenöffnungen 625 zur Aufnahme der Akkuzellen 400 befinden. Die Akkuzellen 400 sind derart in die Zellenöffnungen 625 eingepresst, dass eine form- und kraftschlüssige Verbindung zwischen dem Zellenhalter 600 und den Akkuzellen 400 hergestellt wird. Auf diese Weise wird eine elektrische Isolierung der Akkuzellen 400 untereinander erreicht. Nach dem Einpressen der Akkuzellen 400 liegt der Zellenhalter 600 im Bereich der Zellöffnungen 625 im Wesentlichen spaltfrei an den Akkuzellen 400 an. Neben einer sicheren Aufnahme der Akkuzellen 400 im Zellenhalter 600 kann auf diese Weise auch eine gute Wärmeabfuhr der während des Betriebs des Akkupacks 100 entstehenden Wärme von den Akkuzellen 400 weg erreicht werden.

Um einen möglichst spaltfreien Sitz der Akkuzellen 400 im Zellenhalter 600 zu erreichen, wird bevorzugterweise ein Durchmesser D1 der Zellenöffnungen 625 so gewählt, dass der Durchmesser D1 vor dem Einpressen der Akkuzellen 400 in die Zellenöffnungen 625 zwischen 97 % und 99 %, insbesondere zwischen 97,5 % und 98,5 % eines Durchmessers D2 der korrespondierenden Akkuzellen 400 beträgt. Wobei ein spaltfreier Sitz der Akkuzellen 400 im Zellenhalter 600 zum einen erreicht werden kann, wenn für die Zellenöffnungen 625 ein Durchmesser D1 so gewählt wird, dass der Durchmesser D1 der Zellenöffnungen 625 vor dem Einpressen der Akkuzellen 400 in die Zellenöffnungen 625 zwischen 0,05mm und 0,20mm, insbesondere zwischen 0,10mm und 0,15mm kleiner ist als ein Durchmesser D2 der korrespondierenden Akkuzellen 400 und zum anderen erreicht werden kann, wenn ein Umfang der Zellenöffnungen 625 vor der Aufnahme der Akkuzellen 400 in die Zellenöffnungen 625 zwischen 97% bis 99.5% des eines Umfanges des Zellmantels, bevorzugterweise zwischen 98% bis 99% beträgt. Somit treten bei dem offenbarten Verfahren elastische und/oder plastische Materialdehnungen im Bereich des Zellenhalters 600 auf. Um ein beschädigungsfreies Einbringen der Akkuzellen 400 in die Zellenöffnungen 625 zu gewährleisten, muss ein adäquates Material für den Zellenträger 600 gewählt werden. Der Zellenhalter 600 besteht aus einem Kunststoffmaterial, wobei alternativ auch ein thermoplastischer Kunststoff, ein duroplastischer Kunststoff, oder ein Elastomer, insbesondere ein Polyethylen verwendet werden kann. Dabei weist das Polyethylen eine Dichte zwischen 0,90g/cm³ und 1,0g/cm³, vorzugsweise zwischen 0,95g/cm³ und 0,99g/cm³, besonders bevorzugterweise zwischen 0,96g/cm³ und 0,98g/cm³ auf.

Um den Einpressvorgang effizienter und materialschonender zu gestalten, wird der Zellenhalter 600 vor dem Einpressvorgang auf eine Temperatur zwischen 60°C und 110°C, insbesondere zwischen 70°C und 80°C vorgewärmt. Dies hat zum einen den Vorteil, dass sich thermische Dehnungen einstellen, die einen Teil der notwendigen Verformungen beim Einpressen vorwegnehmen, zum anderen steigt bei den bei den thermoplastischen Kunststoffen mit zunehmender Temperatur die Verformbarkeit, was dem Herstellungsvorgang zugutekommt. Die Materialdehnung, die im Zellenhalter 600 nach dem Einpressen der Akkuzellen 400 auftritt, liegt zwischen 0,2% und 5%, insbesondere zwischen 0,5% und 3%, besonders bevorzugt zwischen 1% und 2%. Hierdurch wird eine ausreichend hohe Zellhaltekraft zur Fixierung der Akkuzellen 400 im Zellenträger 600 mobilisiert. Diese Zellhaltekraft zwischen dem Zellenhalter 600 und den eingepressten Ackuzellen 400 beträgt zwischen 20N und 400N, insbesondere zwischen 100N und 300N, besonders bevorzugt zwischen 150N und 250N.

Ferner sind in Figur 4 Zellverbinder 500 dargestellt, durch die eine elektrische Verschaltung der Akkuzellen 400 untereinander in Parallel- und/oder Reihenschaltung vorgenommen werden kann.

Fig. 5 stellt eine Schnittansicht des erfindungsgemäßen Akkupacks 100 dar, wobei auch hier zu erkennen ist, dass der Zellenhalter 600 die zweite Gehäusekomponente 130 und damit auch eine Außenseite des Akkupackgehäuses 110 ausbildet. Des weiteren kann Figur 5 entnommen werden, dass sich die Mantelflächen 405 zweier im Zellenhalter 600 nebeneinander angeordneter Akkuzellen 400 nicht berühren, sondern durch die hülsenartigen Isolierwandungen 620 mechanisch und elektrisch voneinander getrennt sind. Figur 5 wie auch Figur 4 ist weiterhin zu entnehmen, dass der Zellenhalter 600 im Bereich der Zellöffnungen 625 mit den Akkuzellen 400 korrespondierende Anschläge 630 aufweist, die eine gewünschte Lage der Akkuzellen 400 im Zellenhalter 600 gewährleisten. Die Anschläge 630 gewährleisten eine gewünschte Lage der Akkuzellen 400 im Zellenhalter 600 entlang der Längsachse x der Akkuzellen 400. Dadurch dass die Anschläge 630 die Lage der Akkuzellen 400 in dem Zellenhalter 600 gewährleisten, erleichtern sie das korrekte Einpressen der Akkuzellen in den Zellenhalter.

Die Figur 6 zeigt auf der linken Seite eine zylindrische Akkuzelle 400 mit einer an sich aus dem Stand der Technik bekannten Isolierummantelung 430 und auf der rechten Seite eine zylindrische Akkuzelle 400 ohne eine Isolierummantelung 430, wobei die Akkuzellen 400 jeweils eine zu einer Längsachse x parallel verlaufende Mantelfläche 405 aufweisen, welche von zwei senkrecht zu der Längsachse x stehenden Stirnflächen 410 begrenzt sind. Die Mantelfläche 405 und die Stirnflächen 410 bilden eine Außenhülle der Akkuzelle 400. An den Stirnflächen 410 befinden sich die elektrischen Pole der Akkuzellen 400 zur elektrischen Kontaktierung. Die Außenhülle der Akkuzellen 400 ist aus einem elektrisch leitfähigen Material, insbesondere einem Metall, vorzugsweise Aluminium. Die Isolierummantelung 430 umgibt zumindest die Mantelfläche 405 im Wesentlichen vollständig. Die Stirnflächen 410, insbesondere die Pole an den Stirnflächen 410, liegen frei, um die elektrische Kontaktierung zu ermöglichen. Die Stirnflächen 410, insbesondere die Pole an den Stirnflächen 410 sind frei von der Isolierummantelung 430. Als Isolierummantelung 430 eignen sich elektrisch nicht leitfähige Materialien, z.B. Papier, Pappe, Kunststoff. Die Isolierummantelung 430 bildet insbesondere eine dünne, eng an die Mantelfläche 405 anliegende Hülse.

Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Akkupack (100) für eine Handwerkzeugmaschine (300), aufweisend
ein Akkupackgehäuse (110), umfassend wenigstens eine erste Gehäusekomponente (120) und eine zweite Gehäusekomponente (130), zumindest zwei zylindrische Akkuzellen (400), wobei der Akkupack (100) zumindest einen Zellenhalter (600) aufweist, wobei der Zellenhalter (600) mindestens zwei miteinander in einer Parallel- und/oder in einer Reihenschaltung verbundene Akkuzellen (400) aufnimmt; wobei die Akkuzellen (400) jeweils zwei senkrecht zu einer Längsachse (x) stehende Stirnflächen (410) aufweisen;
eine Akkupackelektronik (800) mit Kontaktelementen (140) zur Herstellung einer elektrischen Verbindung zwischen dem Akkupack (100) und der Handwerkzeugmaschine (300),
der Zellenhalter (600) zumindest bereichsweise mit den Akkuzellen (400) korrespondierende hülsenartige Isolierwandungen (620) aufweist, wobei die Isolierwandungen (620) derart ausgeführt sind, dass eine elektrische Kontaktierung zwischen den Akkuzellen (400) verhindert wird,
**dadurch gekennzeichnet, dass**
der Zellenhalter (600) eine elastische Materialdehnung aufweist, wobei der Zellenhalter (600) für jede Akkuzelle (400) eine Zellenöffnung (625) zur Aufnahme einer Akkuzelle (400) aufweist, wobei zwischen den Zellenöffnungen (625) die Isolierwandungen (620) angeordnet sind und ein Durchmesser D1 der Zellenöffnungen (625) vor der Aufnahme der Akkuzellen (400) in die Zellenöffnungen (625) zwischen 97 % und 99 %, insbesondere zwischen 97,5 % und 98,5 % eines Durchmessers D2 der korrespondierenden Akkuzellen (400) beträgt.

2. Akkupack (100) nach Anspruch 1, **dadurch gekennzeichnet, dass** ein Durchmesser D1 der Zellenöffnungen (625) vor der Aufnahme der Akkuzellen (400) in die Zellenöffnungen (625) zwischen 0,05mm und 0,20mm, insbesondere zwischen 0,10mm und 0,15mm kleiner ist als ein Durchmesser D2 der korrespondierenden Akkuzellen (400).

3. Akkupack (100) nach Anspruch 1, **dadurch gekennzeichnet, dass** ein Umfang der Zellenöffnungen (625) vor der Aufnahme der Akkuzellen (400) in die Zellenöffnungen (625) zwischen 97% bis 99.5% eines Umfanges des Zellmantels, bevorzugterweise zwischen 98% bis 99% beträgt.

4. Akkupack (100) nach einem der Ansprüche 1 bis 3, **dadurch gekennzeichnet, dass** zwischen dem Zellenhalter (600) und den aufgenommenen Akkuzellen (400) eine Zellhaltekraft wirkt, wobei die Zellhaltekraft zwischen 20N und 400N, insbesondere zwischen 100N und 300N, besonders bevorzugt zwischen 150N und 250N beträgt.

5. Akkupack (100) nach einem der Ansprüche 1 bis 5, **dadurch gekennzeichnet, dass** der Zellenhalter (600) im Bereich der Stirnseiten (410) der Akkuzellen (400) freie Bereiche aufweist, in welchen die elektrische Verbindung der Akkuzellen (400) untereinander über Zellverbinder (500) erfolgt.

6. Akkupack (100) nach einem der Ansprüche 1 bis 5, **dadurch gekennzeichnet**, der Zellenhalter (600) im Bereich der Zellöffnungen (625) mit den Akkuzellen (400) korrespondierende Anschläge (630) aufweist, die eine gewünschte Lage der Akkuzellen (400) im Zellenhalter (600) gewährleisten.

7. Akkupack (100) nach einem der Ansprüche 1 bis 6, **dadurch gekennzeichnet, dass** der Zellenhalter (600) zumindest bereichsweise eine Außenseite des Akkupackgehäuse (110) bildet.

8. Akkupack (100) nach einem der Ansprüche 1 bis 7, **dadurch gekennzeichnet, dass** der Zellenhalter (600) die zweite Gehäusekomponente (130) ausbildet.

9. Akkupack (100) nach einem der Ansprüche 1 bis 8, **dadurch gekennzeichnet, dass** die Akkuzellen (400) zumindest bereichsweise keine Isolierummantelung (430) aufweisen.

10. Handwerkzeugmaschine (300) mit einem Elektromotor sowie einem lösbar mit der Handwerkzeugmaschine (300) verbindbaren Akkupack (100) nach einem der vorangegangenen Ansprüche.

11. Verfahren zur Herstellung eines Akkupacks (100) für eine Handwerkzeugmaschine (300), wobei der Akkupack (100) einen Zellenhalter (600) sowie zumindest zwei zylindrische Akkuzellen (400) aufweist, und wobei die Akkuzellen (400) durch korrespondierende Zellverbinder (500) in Parallel- und/oder Reihenschaltung elektrisch miteinander verbunden sind, **dadurch gekennzeichnet, dass**
der Zellenhalter (600) hülsenartige Isolierwandlungen (620) aufweist, zwischen denen sich zylindrische Zellenöffnungen (625) zur Aufnahme der Akkuzellen (400) befinden, wobei die Akkuzellen (400) derart in die Zellenöffnungen (625) unter einer Verformung des Zellenhalters (600), eingepresst werden, dass eine form- und kraftschlüssige Verbindung zwischen dem Zellenhalter (600) und den Akkuzellen (400) hergestellt wird, wobei ein Durchmesser D1 der Zellenöffnungen (625) vor dem Einpressen der Akkuzellen (400) in die Zellenöffnungen (625) zwischen 97 % und 99 %, insbesondere zwischen 97,5 % und 98,5 % eines Durchmessers D2 der korrespondierenden Akkuzellen (400) beträgt, wobei der Zellenhalter (600) vor dem Einpressvorgang derart vorgewärmt wird, dass nach dem Einpressen eine Materialdehnung auftritt, bevorzugterweise auf eine Temperatur zwischen 60°C und 110°C, insbesondere zwischen 70°C und 80°C.

12. Verfahren nach Anspruch 12, **dadurch gekennzeichnet, dass** nach dem Einpressen der Akkuzellen (400) der Zellenhalter (600) im Bereich der Zellöffnungen (625) im Wesentlichen spaltfrei an den Akkuzellen (400) anliegt.

13. Verfahren nach Anspruch 11 oder 12, **dadurch gekennzeichnet, dass** ein Umfang der Zellenöffnungen (625) vor der Aufnahme der Akkuzellen (400) in die Zellenöffnungen (625) zwischen 97% bis 99.5% eines Umfanges des Zellmantels, bevorzugterweise zwischen 98% bis 99% beträgt.

14. Verfahren nach Anspruch 11 oder 12, **dadurch gekennzeichnet, dass** ein Durchmesser D1 der Zellenöffnungen (625) vor dem Einpressen der Akkuzellen (400) in die Zellenöffnungen (625) zwischen 0,05mm und 0,20mm, insbesondere zwischen 0,10mm und 0,15mm kleiner ist als ein Durchmesser D2 der korrespondierenden Akkuzellen (400).

15. Verfahren nach einem der Ansprüche 11 bis 14, **dadurch gekennzeichnet, dass** der Zellenhalter (600) aus einem Kunststoffmaterial besteht, vorzugsweise aus einem thermoplastischen Kunststoff, einem duroplastischen Kunststoff, oder einem Elastomer, besonders bevorzugterweise aus einem Polyethylen.

16. Verfahren nach Anspruch 15, **dadurch gekennzeichnet, dass** das Polyethylen eine Dichte zwischen 0,90g/cm³ und 1,0g/cm³, vorzugsweise zwischen 0,95g/cm³ und 0,99g/cm³, besonders bevorzugterweise zwischen 0,96g/cm³ und 0,98g/cm³ aufweist.

17. Verfahren nach einem der Ansprüche 11 bis 16, **dadurch gekennzeichnet, dass** die Materialdehnung zwischen 0,2% und 5%, insbesondere zwischen 0,5% und 3%, besonders bevorzugt zwischen 1% und 2% liegt.

18. Verfahren nach einem der Ansprüche 11 bis 17, **dadurch gekennzeichnet, dass** zwischen dem Zellenhalter (600) und den eingepressten Akkuzellen (400) eine Zellhaltekraft wirkt, wobei die Zellhaltekraft zwischen 20N und 400N, insbesondere zwischen 100N und 300N, besonders bevorzugt zwischen 150N und 250N beträgt.

## Claims

1. Battery pack (100) for a handheld power tool (300), having
a battery pack housing (110) comprising at least a first housing component (120) and a second housing component (130), at least two cylindrical battery cells (400), wherein the battery pack (100) has at least one cell holder (600), wherein the cell holder (600) receives at least two battery cells (400) which are connected to each other in a parallel circuit and/or in a series circuit; wherein each of the battery cells (400) has two end faces (410) which are perpendicular to a longitudinal axis (x); a battery pack electronics system (800) with contact elements (140) for establishing an electrical connection between the battery pack (100) and the handheld power tool (300),
the cell holder (600) has sleeve-like insulating walls (620) which correspond to the battery cells (400) at least in some regions, wherein the insulating walls (620) are designed in such a way that electrical contact between the battery cells (400) is prevented, **characterized in that**
the cell holder (600) exhibits elastic material expansion, wherein the cell holder (600) has a cell opening (625) for receiving a battery cell (400) for each battery cell (400), wherein the insulating walls (620) are arranged between the cell openings (625), and a diameter D1 of the cell openings (625) before the battery cells (400) are received in the cell openings (625) is between 97% and 99%, in particular between 97.5% and 98.5%, of a diameter D2 of the corresponding battery cells (400).

2. Battery pack (100) according to Claim 1, **characterized in that** a diameter D1 of the cell openings (625) before the battery cells (400) are received in the cell openings (625) is between 0.05 mm and 0.20 mm, in particular between 0.10 mm and 0.15 mm, less than a diameter D2 of the corresponding battery cells (400).

3. Battery pack (100) according to Claim 1, **characterized in that** a circumference of the cell openings (625) before the battery cells (400) are received in the cell openings (625) is between 97% and 99.5% of a circumference of the cell casing, preferably between 98% and 99%.

4. Battery pack (100) according to any of Claims 1 to 3, **characterized in that** a cell holding force acts between the cell holder (600) and the received battery cells (400), wherein the cell holding force is between 20 N and 400 N, in particular between 100 N and 300 N, particularly preferably between 150 N and 250 N.

5. Battery pack (100) according to any of Claims 1 to 5, **characterized in that** the cell holder (600) has free regions in the region of the end sides (410) of the battery cells (400), the battery cells (400) being electrically connected to each other via cell connectors (500) in the free regions.

6. Battery pack (100) according to any of Claims 1 to 5, **characterized in that** the cell holder (600) has stops (630), which correspond to the battery cells (400), in the region of the cell openings (625), the stops ensuring a desired position of the battery cells (400) in the cell holder (600).

7. Battery pack (100) according to any of Claims 1 to 6, **characterized in that** the cell holder (600) forms an outer side of the battery pack housing (110) at least in some regions.

8. Battery pack (100) according to any of Claims 1 to 7, **characterized in that** the cell holder (600) forms the second housing component (130).

9. Battery pack (100) according to any of Claims 1 to 8, **characterized in that** the battery cells (400) have no insulating sheathing (430) at least in some regions.

10. Handheld power tool (300) comprising an electric motor and also a battery pack (100) according to any of the preceding claims which can be detachably connected to the handheld power tool (300).

11. Method for producing a battery pack (100) for a handheld power tool (300), wherein the battery pack (100) has a cell holder (600) and also at least two cylindrical battery cells (400), and wherein the battery cells (400) are electrically connected to each other in a parallel circuit and/or series circuit by corresponding cell connectors (500),
**characterized in that**
the cell holder (600) has sleeve-like insulating walls (620) between which cylindrical cell openings (625) for receiving the battery cells (400) are located, wherein the battery cells (400) are pressed into the cell openings (625) with deformation of the cell holder (600) in such a way that a form-fitting and force-fitting connection is established between the cell holder (600) and the battery cells (400), wherein a diameter D1 of the cell openings (625) before the battery cells (400) are pressed into the cell openings (625) is between 97% and 99%, in particular between 97.5% and 98.5%, of a diameter D2 of the corresponding battery cells (400), wherein the cell holder (600) is preheated before the pressing-in process in such a way that, after the pressing-in operation, material expansion occurs, preferably to a temperature of between 60°C and 110°C, in particular between 70°C and 80°C.

12. Method according to Claim 12, **characterized in that**, after the battery cells (400) have been pressed in, the cell holder (600) bears against the battery cells (400) in the region of the cell openings (625) substantially without gaps.

13. Method according to Claim 11 or 12, **characterized in that** a circumference of the cell openings (625) before the battery cells (400) are received in the cell openings (625) is between 97% and 99.5% of a circumference of the cell casing, preferably between 98% and 99%.

14. Method according to Claim 11 or 12, **characterized in that** a diameter D1 of the cell openings (625) before the battery cells (400) are pressed into the cell openings (625) is between 0.05 mm and 0.20 mm, in particular between 0.10 mm and 0.15 mm, less than a diameter D2 of the corresponding battery cells (400).

15. Method according to any of Claims 11 to 14, **characterized in that** the cell holder (600) consists of a plastics material, preferably of a thermoplastic, a thermoset or an elastomer, particularly preferably of a polyethylene.

16. Method according to Claim 15, **characterized in that** the polyethylene has a density of between 0.90 g/cm³ and 1.0 g/cm3, preferably of between 0.95 g/cm³ and 0.99 g/cm³, particularly preferably of between 0.96 g/cm³ and 0.98 g/cm³.

17. Method according to any of Claims 11 to 16, **characterized in that** the material expansion lies between 0.2% and 5%, in particular between 0.5% and 3%, particularly preferably between 1% and 2%.

18. Method according to any of Claims 11 to 17, **characterized in that** a cell holding force acts between the cell holder (600) and the pressed-in battery cells (400), wherein the cell holding force is between 20 N and 400 N, in particular between 100 N and 300 N, particularly preferably between 150 N and 250 N.

## Revendications

1. Batterie (100) pour un outillage électroportatif (300), présentant
un boîtier de batterie (110), comprenant au moins un premier composant de boîtier (120) et un deuxième composant de boîtier (130), au moins deux cellules d'accumulateur (400) cylindriques, la batterie (100) présentant au moins un support (600) de cellules, le support (600) de cellules recevant au moins deux cellules d'accumulateur (400) reliées entre elles selon un montage en parallèle et/ou en série ; les cellules d'accumulateur (400) présentant chacune deux surfaces frontales (410) perpendiculaires à un axe longitudinal (x) ;
une électronique de batterie (800) avec des éléments de contact (140) pour établir une liaison électrique entre la batterie (100) et l'outillage électroportatif (300), le support (600) de cellules présente au moins par zones des parois isolantes (620) en forme de douille correspondant aux cellules d'accumulateur (400), les parois isolantes (620) étant réalisées de telle sorte qu'une mise en contact électrique entre les cellules d'accumulateur (400) soit empêchée,
**caractérisée en ce que**
le support (600) de cellules présente une dilatation élastique du matériau, le support (600) de cellules présentant, pour chaque cellule d'accumulateur (400), une ouverture (625) de cellule pour recevoir une cellule d'accumulateur (400), les parois isolantes (620) étant agencées entre les ouvertures (625) de cellules et un diamètre D1 des ouvertures (625) de cellules avant la réception des cellules d'accumulateur (400) dans les ouvertures (625) de cellules étant compris entre 97% et 99%, en particulier entre 97,5% et 98,5%, d'un diamètre D2 des cellules d'accumulateur (400) correspondantes.

2. Batterie (100) selon la revendication 1, **caractérisée en ce qu'**un diamètre D1 des ouvertures (625) de cellules avant la réception des cellules d'accumulateur (400) dans les ouvertures (625) de cellules est inférieur de 0,05 mm à 0,20 mm, en particulier de 0,10 mm à 0,15 mm, à un diamètre D2 des cellules d'accumulateur (400) correspondantes.

3. Batterie (100) selon la revendication 1, **caractérisée en ce qu'**une circonférence des ouvertures (625) de cellules avant la réception des cellules d'accumulateur (400) dans les ouvertures (625) de cellules est comprise entre 97% et 99,5% d'une circonférence de l'enveloppe de cellules, de préférence entre 98% et 99%.

4. Batterie (100) selon l'une des revendications 1 à 3, **caractérisée en ce qu'**une force de maintien des cellules agit entre le support (600) de cellules et les cellules d'accumulateur (400) reçues, la force de maintien des cellules étant comprise entre 20N et 400N, en particulier entre 100N et 300N, de manière particulièrement préférée entre 150N et 250N.

5. Batterie (100) selon l'une des revendications 1 à 5, **caractérisée en ce que** le support (600) de cellules présente, dans la zone des faces frontales (410) des cellules d'accumulateur (400), des zones libres dans lesquelles la connexion électrique des cellules d'accumulateur (400) entre elles est réalisée par des connecteurs (500) de cellules.

6. Batterie (100) selon l'une des revendications 1 à 5, **caractérisée en ce que** le support (600) de cellules présente, dans la zone des ouvertures (625) de cellules, des butées (630) correspondant aux cellules d'accumulateur (400), qui garantissent une position souhaitée des cellules d'accumulateur (400) dans le support (600) de cellules.

7. Batterie (100) selon l'une des revendications 1 à 6, **caractérisée en ce que** le support (600) de cellules forme au moins par endroits un côté extérieur du boîtier de batterie (110).

8. Batterie (100) selon l'une des revendications 1 à 7, **caractérisée en ce que** le support (600) de cellules forme le deuxième composant de boîtier (130).

9. Batterie (100) selon l'une des revendications 1 à 8, **caractérisée en ce que** les cellules d'accumulateur (400) ne présentent pas d'enveloppe isolante (430) au moins par zones.

10. Outil électroportatif (300) avec un moteur électrique ainsi qu'une batterie (100) apte à être reliée de manière amovible à l'outil électroportatif (300) selon l'une des revendications précédentes.

11. Procédé de fabrication d'une batterie (100) pour un outillage électroportatif (300), la batterie (100) présentant un support (600) de cellules ainsi qu'au moins deux cellules d'accumulateur cylindriques (400), et les cellules d'accumulateur (400) étant reliées électriquement entre elles par des connecteurs (500) de cellules correspondants selon un montage parallèle et/ou en série,
**caractérisé en ce que**
le support (600) de cellules présente des parois isolantes (620) en forme de douille, entre lesquelles se trouvent des ouvertures (625) de cellules cylindriques destinées à recevoir les cellules d'accumulateur (400), les cellules d'accumulateur (400) étant enfoncées dans les ouvertures (625) de cellules avec une déformation du support (600) de cellules de telle sorte qu'une liaison par complémentarité de forme et par force est établie entre le support (600) de cellules et les cellules d'accumulateur (400), un diamètre D1 des ouvertures (625) de cellules avant l'enfoncement des cellules d'accumulateur (400) dans les ouvertures (625) de cellules étant compris entre 97% et 99%, en particulier entre 97,5% et 98,5% d'un diamètre D2 des cellules d'accumulateur (400) correspondantes, le support (600) de cellules étant préchauffé avant le processus d'enfoncement de telle sorte qu'une dilatation du matériau se produise après l'enfoncement, de préférence à une température comprise entre 60°C et 110°C, en particulier entre 70°C et 80°C.

12. Procédé selon la revendication 12, **caractérisé en ce qu'**après l'emmanchement des cellules d'accumulateur (400), le support (600) de cellules s'applique essentiellement sans intervalle contre les cellules d'accumulateur (400) dans la zone des ouvertures (625) de cellules.

13. Procédé selon la revendication 11 ou 12, **caractérisé en ce qu'**une circonférence des ouvertures (625) de cellules avant la réception des cellules d'accumulateur (400) dans les ouvertures (625) de cellules est comprise entre 97% et 99,5% d'une circonférence de l'enveloppe de cellule, de préférence entre 98% et 99%.

14. Procédé selon la revendication 11 ou 12, **caractérisé en ce qu'**un diamètre D1 des ouvertures (625) de cellules avant l'enfoncement des cellules d'accumulateur (400) dans les ouvertures (625) de cellules est entre 0,05 mm et 0,20 mm, en particulier entre 0,10 mm et 0,15 mm plus petit qu'un diamètre D2 des cellules d'accumulateur (400) correspondantes.

15. Procédé selon l'une des revendications 11 à 14, **caractérisé en ce que** le support (600) de cellules est constitué d'un matériau plastique, de préférence d'un matériau thermoplastique, d'un matériau thermodurcissable, ou d'un élastomère, de manière particulièrement préférée d'un polyéthylène.

16. Procédé selon la revendication 15, **caractérisé en ce que** le polyéthylène présente une densité comprise entre 0,90g/cm³ et 1,0g/cm³, de préférence entre 0,95g/cm³ et 0,99g/cm3, de manière particulièrement préférée entre 0,96g/cm³ et 0,98g/cm³.

17. Procédé selon l'une quelconque des revendications 11 à 16, **caractérisé en ce que** l'allongement du matériau est compris entre 0,2% et 5%, notamment entre 0,5% et 3%, de façon encore préférée entre 1% et 2%.

18. Procédé selon l'une des revendications 11 à 17, **caractérisé en ce qu'**une force de maintien des cellules agit entre le support (600) de cellules et les cellules d'accumulateur (400) pressées, la force de maintien des cellules étant comprise entre 20N et 400N, en particulier entre 100N et 300N, de manière particulièrement préférée entre 150N et 250N.
